# EUROPEAN PATENT SPECIFICATION

(11) **EP 0 274 857 B1**
(45) Date of publication and mention of the grant of the patent: **19.01.1994**
(21) Application number: 87310690.0
(22) Date of filing: 04.12.1987
(51) Int. Cl.: H04B 7/26, H04B 7/155

(54) **Mobile radio systems**
Bewegliche Funksysteme
Systèmes hertziens mobiles

(30) Priority: 05.12.1986 GB 8629159
(43) Date of publication of application: 20.07.1988
(73) Proprietor: BRITISH TELECOMMUNICATIONS public limited company, London EC1A 7AJ (GB)
(72) Inventor: Turner, Michael Neil, Ipswich Suffolk IP2 9JN (GB)
(74) Representative: Pratt, David Martin

(56) References cited:
- EP-A- 0 169 384
- US-A- 3 668 525
- US-A- 4 152 647
- PATENT ABSTRACTS OF JAPAN, vol. 7, no. 123 (E-178)[1268], 27th May 1983 & JP-A-58 40 938

## Description

The present invention relates to a radio repeater, and in particular, though not exclusively, to a radio repeater for a mobile radio system.

In a mobile radio system, there often exist areas of poor coverage within the service area of a base station where poor signal reception by the base station from a mobile (and vice versa) results in unacceptable voice quality or even the total loss of a call. One solution to this problem is the provision of a wideband repeater or re-radiator. This however suffers from certain disadvantages, viz (i) it would re-radiate all signals within the frequency range covered - including unwanted signals, eg from other radio systems which may be using the band; (ii) intermodulation and wideband noise; and (iii) the power level of each channel within the band would be amplified by an equal amount regardless of the actual signal strength.

A known radio repeater, disclosed in US-A-4,152,647 (Gladden et al) scans a plurality of frequencies and, if a frequency is carrying an appropriate access code, retransmits that signal on another frequency with an access code for the receiver for which it is intended. This system can only handle one communication link at a time. Furthermore since retransmission occurs on a different frequency from that received, the station at the receiving end must be tuned to a different frequency from the transmitting station, making this system unsuitable for situations where the receiving station is initially in direct communication with the transmitting station and moves into an area where the receiving and transmitting stations can only communicate through the repeating station, since the receiving station must then re-tune to the frequency of the repeater station.

According to one aspect, the invention provides a radio repeater for a frequency band containing a plurality of channels, comprising monitoring and control means operable to scan the channels of the band so that the monitoring and control means can identify a channel carrying traffic from amongst a plurality of channels, characterised by a plurality of single channel amplifier units operable in conjunction with the monitoring and control means so that when a channel carrying traffic is identified from the plurality of scanned channels by the monitoring and control means, one of the single channel amplifier units can be enabled to receive and transmit on the identified traffic carrying channel.

Although one unit could be provided for each channel allocated for use with the band, in a preferred arrangement the number of amplifier units is smaller than the number of said channels, the amplifier units are of selectable frequency and the monitoring and control means are arranged, in use, to select the frequency of each unit for assignment to a traffic-carrying channel.

Each amplifier unit may have, for duplex operation, forward and reverse amplifying paths. Advantageously, each amplifier unit has, in each amplifying path, a frequency changer for converting input signals down to an intermediate frequency, a band-pass filter, and a second frequency changer for converting the filtered signals up to the original frequency, the filter frequency being fixed, and the channel assignment of the unit being controllable by controlling the frequency changer local oscillator frequency. Preferably, the intermediate frequencies for the forward and reverse paths of an amplifier unit differ by an amount corresponding to the transmit-receive frequency spacing of the channels, whereby a single local oscillator may be used for the unit.

In a preferred embodiment, the monitoring and control means is common to all the amplifier units. In this case, one channel may be designated as a signalling channel, the monitoring and control means being arranged, in the event that a traffic-carrying channel is identified when one amplifier unit is assigned to the signalling channel and the remaining units are in use, to reassign said one amplifier unit to the identified channel.

In another preferred embodiment, the control means is common to all the amplifier units, and each amplifier unit incorporates its own monitoring means. Advantageously, the monitoring means of each amplifier unit includes a synthesiser and address decoding and data multiplexing circuits. In this case, the control means may be constituted by a control unit having a central processor, a program memory and a non-volatile data memory, the control unit being interfaced with the amplifier units.

Preferably, the control unit is effective to select a first of the amplifier units as a signalling channel of predetermined frequency, and to command the synthesiser of said first amplifier unit to tune to said predetermined frequency. Then, the control unit may be effective to select a second of the amplifier units as a voice channel scanner, and to command the synthesiser of said second amplifier unit to tune to the frequency of one of the voice channels. Subsequently, the control unit may be effective to interrogate said second amplifier unit to determine whether that unit is receiving signal whose strength is greater than a predetermined threshold, and to enable that amplifier unit if said predetermined threshold is exceeded by the received signal. In the case where the received signal is less than said predetermined threshold, the control unit may then be effective to command the synthesiser of said second amplifier unit to tune to the frequencies of other voice channels in turn, to interrogate the other amplifier units to determine whether any unit is receiving a signal whose strength is greater than said predetermined threshold, and to enable that amplifier unit if said predetermined threshold is exceeded. Advantageously, the control unit is effective to allocate a third of the amplifier units as the voice channel scanner upon an amplifier unit being enabled.

Conveniently, the control unit is effective to scan the amplifier units and to release any enabled unit whose received signal strength does not exceed said predetermined threshold.

Two forms of radio repeater, each of which is constructed in accordance with the invention, will now be described, by way of example, with reference to the accompanying drawings, in which:
- Figure 1: shows schematically a mobile radio area;
- Figure 2: is a block diagram of the first form repeater;
- Figure 3: is a block diagram of one amplifier unit of the repeater of Figure 2;
- Figure 4: is a block diagram of the RF module of the repeater of Figure 2;
- Figure 5: is a flowchart illustrating the operation of the control unit of the repeater of Figure 2;
- Figure 6: is a block diagram of the second form of repeater;
- Figure 7: is a control functions block diagram showing the interface between the control unit of the repeater of Figure 6 and its channel amplifier modules; and
- Figure 8: is a flowchart illustrating the operation of the control unit of the repeater of Figure 6.

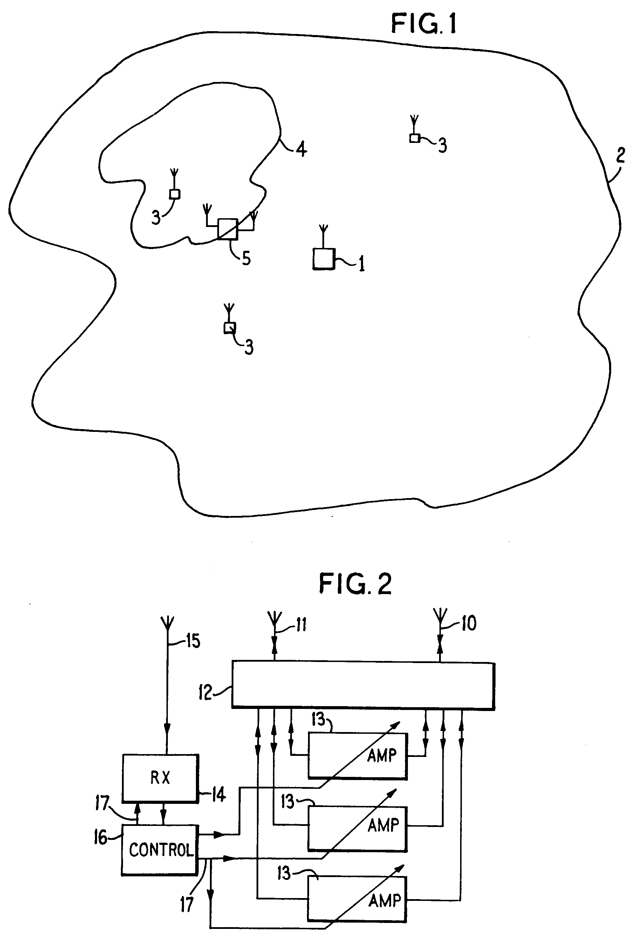

Referring to the drawings, Figure 1 illustrates schematically a mobile radio system, in which a base station 1 serves an area 2 - perhaps one "cell" of a cellular radio system for two-way voice communication with a number of mobile units 3. It is assumed that, within a given frequency band, duplex radio channels, namely a control or signalling channel and a number of voice channels, are allocated for communication between the base station 1 and the mobile units 3 within the area 2. Owing (for example) to the nature of the terrain, there exists within the area 2 a poor coverage area, 4. The quality of communication between the base station 1 and the mobile units 3 within this area is unsatisfactory, and a fixed repeater 5 is provided at a location such that it can achieve satisfactory radio communication both with the base station and with the mobile units within the poor coverage area 4.

Figure 2 illustrates a first form of repeater which has, in outline, an antenna 10 for communication with the base station 1, and an antenna 11 for communication with the mobile units 3 within the poor coverage area 4. Between the two antennas 10 and 11 are connected, via a radio frequency (RF) module 12, a number (three only of which are shown) of duplex, single-channel amplifier modules 13. The number of modules 13 is less than the number of channels allocated for the radio area 2. Consequently, a monitoring receiver 14 is connected to an antenna 15 for mobile-to-base transmissions within the poor coverage area 4. The receiver 14 scans the allocated channels to identify those which are in use, and reports its findings to a control unit 16 which switches the amplifier units to the appropriate channels. Alternatively, the antenna 11 could be used instead of the antenna 15.

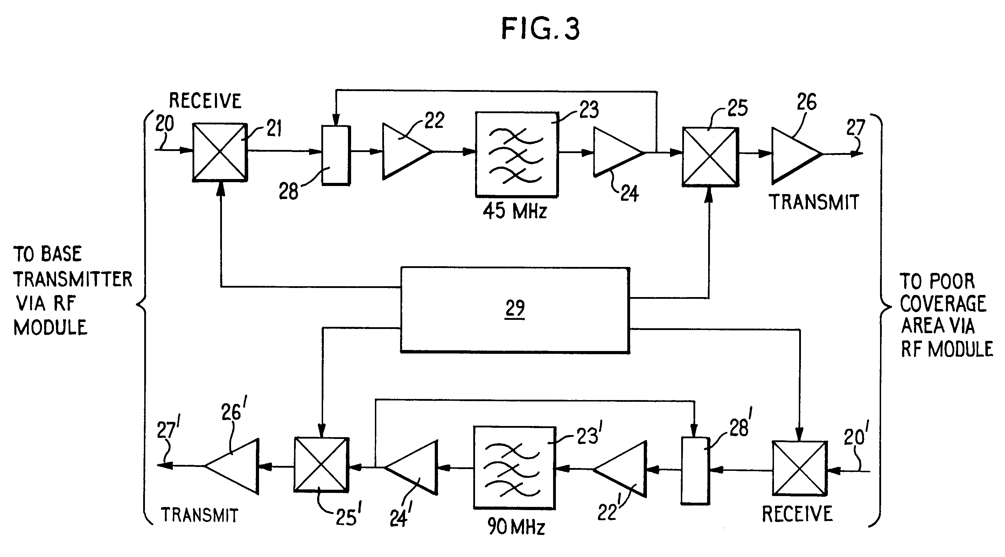

An amplifier module 13 is shown in Figure 3. In order to achieve the selectivity required for channel selection, incoming signals are converted down to an intermediate frequency (IF), filtered and up-converted. The signals could be fully demodulated and remodulated, but this complexity is felt to be unnecessary. Though not in principle essential, the frequency of re-radiation is the same as that of the received signals, to avoid the necessity of requiring the mobile unit 3 (or the base station 1) to change frequency.

In Figure 3, the signal received at an input 20 from the base station 1 is down-converted in a mixer 21 to an intermediate frequency of (for example) 45MHz, and the desired channel is filtered in a band-pass filter 23 and amplified by amplifiers 22 and 24. It is then up-converted to the original frequency (by mixer 25), amplified in a power amplifier 26 and supplied to an output 27 for retransmission to the poor coverage area 4. An automatic gain control (a.g.c.) circuit 28 is also shown, this ensuring that only that amount of amplification appropriate to the received signal strength on the selected channel is applied. The mobile-to-base transmission direction is treated similarly by units 20' to 28', except that (assuming a transmit-receive frequency spacing of 45MHz) a 90MHz I.F. is chosen, so that a single output from a local oscillator 29 can be used to supply all four mixers 21, 25, 21', 25'. The I.F. filters 23,23' are fixed frequency and channel selection is effected by controlling the frequency of the local oscillator 29, which is a conventional frequency synthesiser capable of being switched (via a control bus 17 from the control unit 16) to frequencies such that the I.F. filters select any of the allocated channels. Similarly, the control unit 16, via the bus 17, can control the supply of power to the amplifiers 13, effectively turning the channel module on or off.

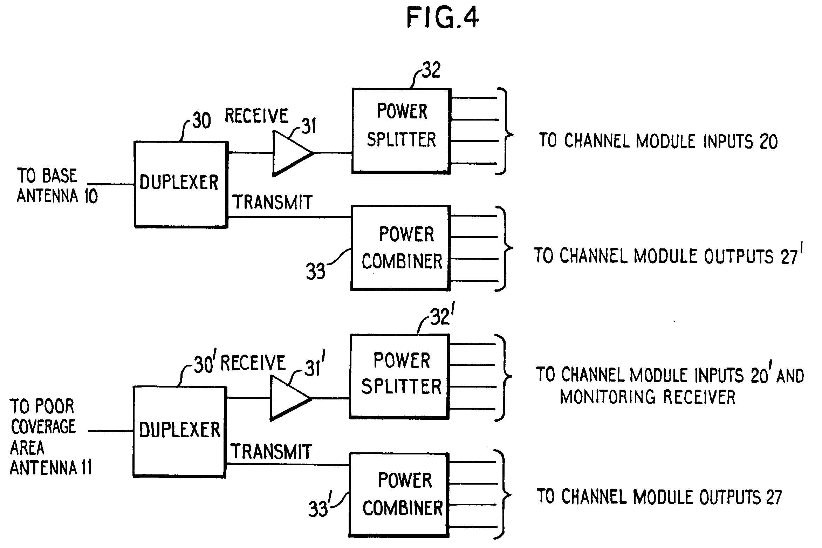

The RF interface is shown in Figure 4. The "base" antenna 10 is connected via a duplexer 30 to (a) a receive preamplifier 31 and a power splitter 32 which feeds the module inputs 20 (and, if required, the monitoring receiver 14), and (b) a passive power combiner 33 which receives the module outputs 27'. Similar components 30' to 33' interface the "mobiles" antenna 11 to the module inputs 20' and outputs 27.

The identification of active channels requiring the use of amplifier modules 13 could be carried out autonomously by the modules themselves, but this would require special arrangements to prevent two modules switching to the same channel, and it is preferred to employ a common channel monitoring and control function.

The monitoring receiver 14 could be a proprietary receiver, and hence will not be described in detail. It is required to scan the channels, under control of the control unit 16, and reports the measured signal strengths.

The control unit 16 comprises a central processor, a program memory, a non-volatile data memory, and interfaces to the control bus 17, the monitoring receiver 14, and to a keyboard and terminal. This is a conventional architecture and will not, therefore, be described in detail.

The function of the control unit 16 is to use the signal strengths determined by the monitoring receiver 14 to determine to which frequencies the channel modules 13 should be switched. Thus, when the signal strength on a channel is greater than a predetermined threshold, the channel is judged to be in use. If a channel module 13 is available, it will be switched on to amplify that channel, and will remain on that channel until the signal strength of the associated mobile unit 3 falls below a (lower) predetermined level.

When the repeater is initially switched on, a user may have the option to enter, via the keyboard, the channel numbers that the enhancer needs to scan in the poor coverage area 4, these then being stored in the non-volatile memory. Alternatively, the channel numbers could be permanently set up in a read-only memory.

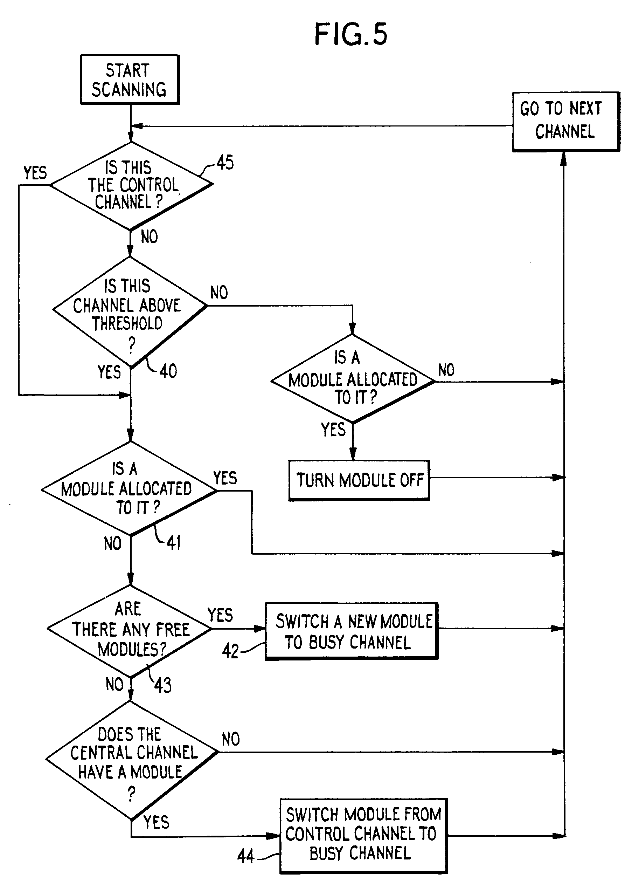

Once the control unit 16 has established the channel numbers, either from the keyboard or from the memory, it then enters a loop that scans, in turn, the mobile-to-base transmissions of all the relevant channels. In the cellular system, the channels to scan will consist of one control channel and a number of speech channels (the control channel is used for registration of mobile transmitters onto the cellular system and for setting up telephony calls). Figure 5 is a flowchart for the control unit operation. Each time a channel is found that has a signal above the set threshold (40), and has no channel module 13 switched to it (41), the control unit 16 will try to allocate a free channel module to it (42). If no free channel modules 13 exist but (43) the control channel has a channel module allocated to it, then the control unit 16 will switch the channel module from the control channel to the new channel (44). When a channel module 13 again becomes free, it will be reallocated to the control channel on the next scan, irrespective (45) of whether there is actually signalling on the control channel at the time. Two lists are kept inside the control unit 16; one recording which, if any, channel module 13 is being used by each channel; the other recording which, if any, channel each channel module is switched to. These lists will ensure that no two channel modules 13 are switched to the same channel, and that the control unit 16 does not allocate one channel module to two channels. Similarly, if a channel is found whose signal is below the threshold and that channel has a channel module 13 allocated to it, then the channel module is switched off, and is then free to be allocated to other channels.

In general, the channels may have a priority order assigned to them, so that the high priority channels will have a better chance of having a free channel module 13 allocated to them. The control channel (if present) can be allocated a high or low priority, depending on its use in the radio system. The description of the previous paragraph assumes that the control channel has the lowest priority, whilst the speech channels all have the same higher, priority.

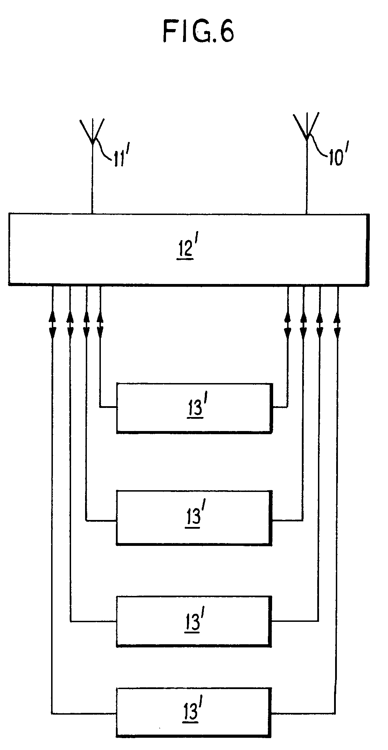

Figure 6 illustrates schematically a second form of repeater 5'. This repeater 5' has an antenna 10' for communication with the base station 1, and an antenna 11' for communication with the mobile units 3 within the poor coverage area 4. As with the embodiment of Fig. 2, a number (four only of which are shown) of duplex, single-channel amplifier modules 13' are connected via an RF module 12', between the two antennas 10' and 11' The number of modules 13' is less than the number of channels assigned to the radio area 2. The modules 13' are similar to the modules 13 (one of which is shown in Fig. 3), and so will not be described in detail here. Also, the RF module 12' is similar to the module 12 shown in Fig.4.

The main difference between the repeater 5' and the repeater 5 is that the former does not have a monitoring receiver. Instead, each of the channel modules 13' is arranged to provide a control unit 16' with a Received Signal Strength Indication (RSSI) for each of the two incoming signals.

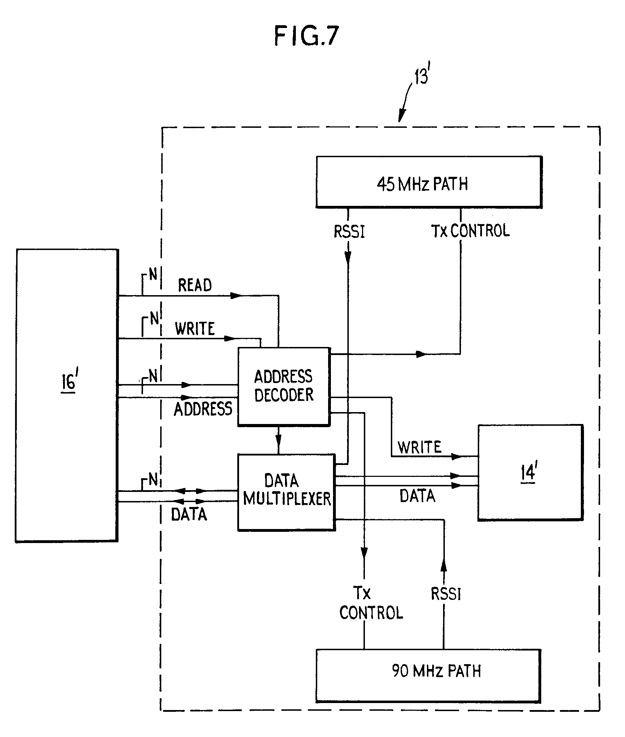

The control unit 16' includes a central processor, a program memory, and a non-volatile data memory, and is interfaced to the channel amplifier modules 13' as shown in Fig. 7. Also connected is a keyboard and terminal. The control unit 16' is of conventional architecture, and will not, therefore, be described in detail. Fig. 7 also shows one of the channel modules 13' together with its synthesiser 14' and its address decoding and data multiplexing circuits which allow the functions in that channel module to be independently addressed. These functions enable the control unit 16' to write data in parallel to the synthesiser 14' of the module 13' , which synthesiser contains its own read/write memory, thereby independently switching on and off the two transmitters, and reading the RSSI of signals both from the base station 1 and the associated mobile unit 3. For each RSSI, a comparison is made with a predetermined threshold level and a binary decision made available to the control unit 16' .

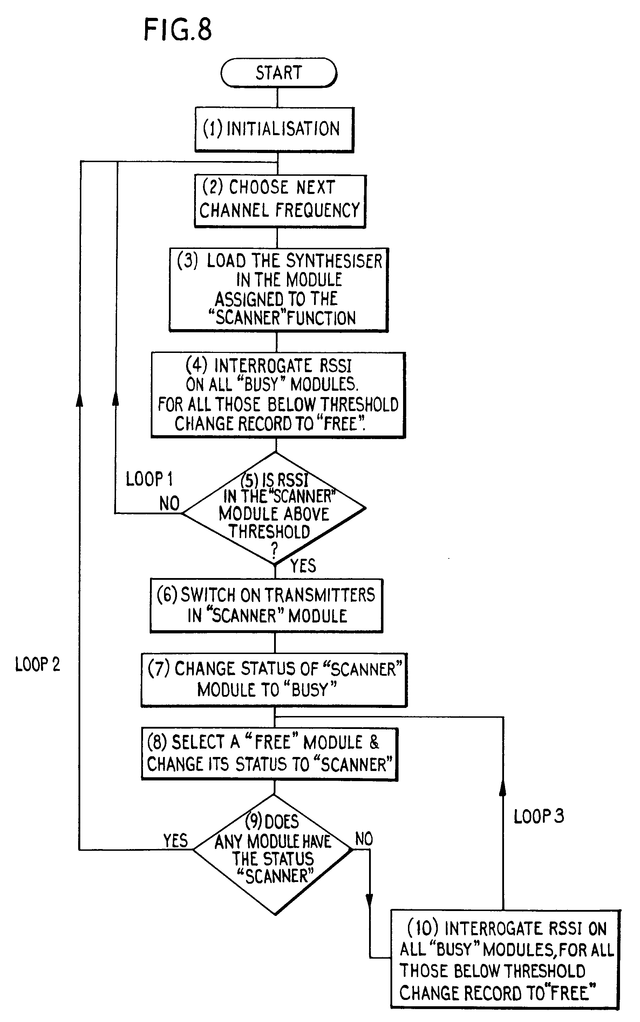

The control unit 16' functions are summarised in the flowchart of Fig. 8, which consists of ten program stages described as follows:

The act of switching on the control unit 16' starts the program which begins at stage 1.

### Stage 1:

This stage executes the following initialisation functions.
A. It provides the user with the option to enter, via the keyboard, the channel numbers (or their associated frequencies) of the N channels assigned to the radio area 2, these then being stored in the non-volatile data memory. Alternatively, the channel numbers could be permanently set up in read-only memory.
B. It initialises the synthesisers 14' in the channel modules 13' .
C. It switches off the two transmitters in each of the channel modules 13'.
D. It establishes various software tables which keep track of the status of the channel modules 13' and the status of the N channels assigned to the radio area 2.
E. It selects one channel module 13' , commands its synthesiser 14' to tune to the signalling channel used in that radio area 2, and switches on its two transmitters.
F. It selects one of the remaining free channel modules 13' , and assigns this to the function of voice channel "scanner".

Following stage 1 the program moves to stage 2.

### Stage 2:

This chooses the next one out of the N channels which the channel status records show as being "free". The N channels are listed in cyclic order.

### Stage 3:

This loads the synthesisers 14' in the module 13' previously assigned the status of "scanner with the data required to tune it to the frequency appropriate to the channel chosen in stage 2.

Immediately following stage 3, the synthesiser 14' starts to hunt for the new frequency. As this will take several milliseconds to "lock on", it is convenient to occupy this otherwise spare time in the execution of stage 4.

### Stage 4:

This stage interrogates all the busy modules 13' , and releases any that are found to be no longer required to perform the voice channel enhancement function. The criteria for release is based on the RSSI relative to a predetermined threshold. The transmitters in these modules 13' are switched off, and their status changed to "free" in the records.

### Stage 5:

By the time this stage is reached, the synthesiser 14' in the "scanner" module has locked on to its new frequency as instructed by stages 2 and 3 previously. The "scanner" module is then interrogated to determine the presence or absence, of a signal received from a mobile unit 3 (the criteria for the presence of a signal is based on the RSSI relative to a predetermined threshold).

In the absence of a received signal, the program returns via loop 1 to stage 2, where the sequence is repeated but with the synthesiser 14' tuned to a frequency appropriate to another free channel.

In the event that signals are absent from all of the "free" channels, this sequence of stages 2 to 5, is repeated with stage 2 choosing the channels cyclically.

When a signal on a channel is detected at stage 5, the program branches to stage 6.

### Stage 6:

This stage switches on the two transmitters, and the enhancement function starts. No further instructions are sent to the synthesiser 14' because it is by this stage tuned to suit the newly-active channel.

### Stage 7:

During this stage, the record of module status is changed from "scanner" to "busy", and the record of channel status changed from "free" to busy.

### Stage 8:

This stage assigns a free module 13' if there is a free one, to the status of "scanner", and amends the module status record accordingly.

### Stage 9:

This stage interrogates the module status records and, if it finds a module 13' is assigned the "scanner" status, it branches the program via loop 2. Otherwise it branches to stage 10.

### Stage 10:

This stage performs the same function as stage 4, except that, when finished, it returns the program via loop 3 to stage 8.

In a modified version of this (second) embodiment the control unit 16' may be given the capability to allocate a different module 13' (originally made in stage 1 part E) to enhance the signalling channel, in the event that the first module 13' fails.
Also the control unit 16' may be given the capability to re-tune the module 13' allocated to enhancing the signalling channel to an alternative pre-arranged channel, in the event that the base station 1 ceases to transmit on the initial channel, and resumes on an alternative channel. In both cases, the flowchart of Fig 8 would need to be modified accordingly.

## Claims

1. A radio repeater for a frequency band containing a plurality of channels, comprising monitoring and control means (14, 16, 17; 16') operable to scan the channels of the band so that the monitoring and control means can identify a channel carrying traffic from amongst a plurality of channels, characterised by a plurality of single channel amplifier units (13; 13') operable in conjunction with the monitoring and control means so that when a channel carrying traffic is identified from the plurality of scanned channels by the monitoring and control means, one of the single channel amplifier units (13; 13') can be enabled to receive and transmit on the identified traffic carrying channel.

2. A repeater according to claim 1, in which each unit amplifier has, for duplex operation, forward and reverse amplifying paths (20-27, 20'-27').

3. A repeater according to claim 1 or 2, in which the number of amplifier units (13; 13') is smaller than the number of said channels, the amplifier units (13; 13') are of selectable frequency, and the monitoring and control means (14, 16, 17; 16') are arranged, in use, to select the frequency of each unit for assignment to a traffic-carrying channel.

4. A repeater according to claim 3, in which each amplifier unit (13) has, in each amplifying path, a frequency changer (21, 21') for converting input signals down to an intermediate frequency, a band-pass filter (23, 23'), and a second frequency changer (25, 25') for converting the filtered signals up to the original frequency, the filter frequency being fixed, and the channel assignment of the unit being controllable by controlling the frequency changer local oscillator frequency.

5. A repeater according to claim 4, in which the intermediate frequencies for the forward and reverse paths (20-27, 20'-27') of an amplifier unit (13) differ by an amount corresponding to the transmit-receive frequency spacing of the channels, whereby a single local oscillator (29) may be used for the unit.

6. A repeater according to any one of the preceding claims, in which the monitoring and control means (14, 16, 17) is common to all the amplifier units.

7. A repeater according to claim 6 when appendant to claim 3, for use in a mobile radio system, in which one channel is designated as a signalling channel, the monitoring and control means (14, 16, 17; 16') is arranged, in the event that a traffic-carrying channel is identified when one amplifier unit (13; 13') is assigned to the signalling channel and the remaining units are in use, to reassign said one amplifier unit to the identified channel.

8. A repeater according to any one of claims 1 to 5, in which the control means (16') is common to all the amplifier units (13'), and in which each amplifier unit incorporates its own monitoring means.

9. A repeater according to claim 8, in which the monitoring means of each amplifier unit (13') includes a synthesiser and address decoding and data multiplexing circuits.

10. A repeater according to claim 9, in which the control means (16') is constituted by a control unit having a central processor, a program memory and a non-volatile data memory, the control unit being interfaced with the amplifier units (13').

11. A repeater according to claim 10, in which the control unit (16') is effective to select a first of the amplifier units (13') as a signalling channel of predetermined frequency, and to command the synthesiser of said first amplifier unit to tune to said predetermined frequency.

12. A repeater according to claim 11, in which the control unit (16') is effective to select a second of the amplifier units (13') as a voice channel scanner, and to command the synthesiser of said second amplifier unit to tune to the frequency of the voice channel scanner.

13. A repeater according to claim 12, in which the control unit (16') is effective to interrogate said second amplifier unit (13') to determine whether that unit is receiving a signal whose strength is greater than a predetermined threshold, and to enable that amplifier unit (13') if said predetermined threshold is exceeded by the received signal.

14. A repeater according to claim 12, wherein, where the received signal is less than said predetermined threshold, the control unit (16') may be effective to command the synthesiser of said second amplifier unit (13') to tune to the frequencies of the other voice channels in turn, to interrogate the other amplifier units (13') to determine whether any unit is receiving a signal whose strength is greater than said predetermined threshold, and to enable that amplifier unit if said predetermined threshold is exceeded.

15. A repeater according to claim 13 or claim 14, in which the control unit (16') is effective to allocate a third of the amplifier units (13') as the voice channel scanner upon an amplifier unit being enabled.

16. A repeater according to any one of the claims 10 to 15, in which the control unit (16') is effective to scan the amplifier units (13') and to release any enabled unit whose received signal strength does not exceed said predetermined threshold.

17. A mobile radio system including at least one base station (1) covering an area, and a repeater (5) according to any one of the preceding claims for enhancing communication between the base station (1) and mobile stations (3) within a sub-area of the area covered.

## Patentansprüche

1. Funkrelaisstation für ein Frequenzband mit einer Vielzahl von Kanälen, das eine Überwachungs- und Steuereinrichtung (14, 16, 17; 16') mit der Funktion aufweist, die Kanäle des Bandes abzutasten, so daß die Überwachungs- und Steuereinrichtung einen verkehrführenden Kanal unter einer Vielzahl von Kanälen identifizieren kann, gekennzeichnet durch eine Vielzahl von Einzelkanalverstärkereinheiten (13; 13'), die in Verbindung mit der Überwachungs- und Steuereinrichtung arbeiten, derart, daß wenn ein verkehrführender Kanal unter der Vielzahl der von der Überwachungs- und Steuereinrichtung abgetasteten Kanäle identifiziert ist, eine der Einzelkanalverstärkereinheiten (13; 13') aktiviert werden kann, um über den identifizierten verkehrführenden Kanal zu empfangen und zu senden.

2. Relaisstation nach Anspruch 1, bei der jeder Verstärker einer Einheit für den Duplexbetrieb vorwärts- und rückwärtsverstärkende Pfade (20-27, 20'-27') aufweist.

3. Relaisstation nach Anspruch 1 oder 2, bei der die Anzahl der Verstärkereinheiten (13; 13') Kleiner als die Anzahl der Kanäle ist, wobei die Verstärkereinheiten (13; 13') solche mit wählbarer Frequenz sind, und die Überwachungs- und Steuereinrichtungen (14, 16, 17; 16') beim Einsatz so angeordnet sind, daß sie die Frequenz jeder Einheit zwecks Zuteilung an einen verkehrführenden Kanal auswählen.

4. Relaisstation nach Anspruch 3, bei der jede Verstärkereinheit (13) in jedem Verstärkungspfad einen Frequenzumsetzer (21, 21') zum Abwärtsmischen von Eingangssignalen auf eine Zwischenfrequenz, ein Bandpassfilter (23, 23') und einen zweiten Frequenzumsetzer (25, 25') zum Aufwärtsmischen der gefilterten Signale auf die ursprüngliche Frequenz aufweist, wobei die Filterfrequenz festgelegt und die Kanalzuteilung der Einheit durch Steuern der Lokaloszillatorfrequenz des Frequenzwechslers einstellbar ist.

5. Relaisstation nach Anspruch 4, bei der sich die Zwischenfrequenzen für die Vorwärts- und Rückwärtspfade (20-27, 20'-27') einer Verstärkereinheit (13) um einen Betrag unterscheiden, der dem Sende-Empfang-Frequenzabstand der Kanäle entspricht, wobei ein einzelner Lokaloszillator (29) für die Einheit eingesetzt werden kann.

6. Relaisstation nach einem beliebigen vorhergehenden Anspruch, bei der die Überwachungs- und Steuereinrichtung (14, 16, 17) allen Verstärkereinheiten gemeinsam ist.

7. Relaisstation nach Anspruch 6 mit Rückbezug desselben auf Anspruch 3, zur Verwendung in einem mobilen Funksystem, bei dem einer der Kanäle als Signalisationskanal dient, wobei die Überwachungs- und Steuereinrichtung (14, 16, 17; 16') im Falle, daß ein verkehrführender Kanal identifiziert wird, wenn eine einzelne Verstärkereinheit (13; 13') dem Signalisationskanal zugeteilt und die übrigen Einheiten in Betrieb sind, so geschaltet ist, daß die genannte einzelne Verstärkereinheit wieder dem identifizierten Kanal zugeteilt wird.

8. Relaisstation nach einem beliebigen Anspruch 1 bis 5, bei der die Steuereinrichtung (16') allen Verstärkereinheiten (13') gemeinsam ist, und bei der jede Verstärkereinheit ihre eigene Überwachungseinrichtung enthält.

9. Relaisstation nach Anspruch 8, bei der die Überwachungseinrichtung jeder Verstärkereinheit (13') einen Synthesizer sowie Adressendecodier- und Datenmultiplexierschaltungen umfaßt.

10. Relaisstation nach Anspruch 9, bei der die Steuereinrichtung (16') aus einer Steuereinheit mit einem Zentralprozessor, einem Programmspeicher und einem nichtflüchtigen Datenspeicher besteht, wobei die Steuereinheit über Schnittstellen mit den Verstärkereinheiten (13') verbunden ist.

11. Relaisstation nach Anspruch 10, bei der die Steuereinheit (16') in der Lage ist, eine erste Einheit der Verstärkereinheiten (13') als Signalisationskanal vorbestimmter Frequenz zu wählen und den Synthesizer der genannten ersten Verstärkereinheit anzuweisen, sich auf die vorbestimmte Frequenz abzustimmen.

12. Relaisstation nach Anspruch 11, bei der die Steuereinheit (16') in der Lage ist, eine zweite Einheit der Verstärkereinheiten (13') als Sprachkanalabtaster zu wählen und den Synthesizer der genannten zweiten Verstärkereinheit anzuweisen, sich auf die Frequenz des Sprachkanalabtasters abzustimmen.

13. Relaisstation nach Anspruch 12, bei der die Steuereinheit (16') in der Lage ist, die genannte zweite Verstärkereinheit (13') abzufragen, um zu bestimmen, ob die betreffende Einheit ein Signal empfängt, dessen Stärke größer als ein vorbestimmter Schwellenwert ist; und um die betreffende Verstärkereinheit (13') zu aktivieren, falls der vorbestimmte Schwellenwert vom empfangenen Signal überschritten wird.

14. Relaisstation nach Anspruch 12, bei der im Falle, daß das empfangene Signal unter dem vorbestimmten Schwellenwert liegt, die Steuereinheit (16') wirksam werden kann, um den Synthesizer der genannten zweiten Verstärkereinheit (13') anzuweisen, sich seinerseits auf die Frequenzen der anderen Sprachkanäle einzustellen und die anderen Verstärkereinheiten (13') abzufragen um festzustellen, ob irgendeine Einheit ein Signal empfängt, dessen Stärke größer als der vorbestimmte Schwellenwert ist; und um die betreffende Verstärkereinheit zu aktivieren, falls der vorbestimmte Schwellenwert überschritten wird.

15. Relaisstation nach Anspruch 13 oder 14, bei der die Steuereinheit (16') in der Lage ist, nach der Aktivierung einer Verstärkereinheit eine dritte Einheit der Verstärkereinheiten (13') als Sprachkanalabtaster zuzuteilen.

16. Relaisstation nach einem beliebigen Anspruch 10 bis 15, bei der die Steuereinheit (16') in der Lage ist, die Verstärkereinheiten (13') abzutasten und jede beliebige aktivierte Einheit freizugeben, deren empfangene Signalstärke den vorbestimmten Schwellenwert nicht überschreitet.

17. Mobiles Funksystem das mindestens eine, einen Bereich abdeckende Basisstation (1) und eine Relaisstation (5) gemäß einem beliebigen vorhergehenden Anspruch zur Verbesserung der Verbindung zwischen der Basisstation (1) und den mobilen Station (3) innerhalb eines Teilbereichs des abgedeckten Gebietes umfaßt.

## Revendications

1. Un répéteur radio pour une bande de fréquences contenant une série de canaux, comprenant des moyens de surveillance et de commande (14, 16, 17; 16') pouvant être mis en oeuvre pour balayer les canaux de la bande d'une manière telle que le moyen de surveillance et de commande peut identifier parmi une série de canaux un canal porteur d'un trafic, caractérisé par une série d'unités amplificatrices (13; 13') de canaux uniques susceptibles d'être mises en oeuvre en liaison avec le moyen de surveillance et de commande d'une manière telle que l'une des unités amplificatrices (13; 13') de canaux uniques peut être validée, Iorsqu'un canal porteur d'un trafic est identifié dans la série des canaux balayés, afin de recevoir et de transmettre sur le canal identifié porteur d'un trafic.

2. Un répéteur selon la revendication 1, dans lequel chaque unité amplificatrice est pourvue de trajets d'amplification direct et inverse (20-27, 20'-27') pour fonctionner en duplex.

3. Un répéteur selon la revendication 1 ou 2, dans lequel le nombre des unités amplificatrices (13; 13') est plus petit que le nombre desdits canaux, les unités amplificatrices (13; 13') sont d'une fréquence qui peut être choisie, et le moyen de surveillance et de commande (14, 16, 17; 16') est agencé de manière à choisir, en utilisation, la fréquence de chacune des unités pour une assignation à un canal de transport de trafic.

4. Répéteur selon la revendication 3, dans lequel chaque unité amplificatrice (13) comporte, dans chaque trajet amplificateur, un modificateur de fréquences (21, 21') pour convertir des signaux d'entrée à une fréquence intermédiaire plus basse, un filtre passe-bande (23, 23') et un deuxième modificateur de fréquence (25, 25') pour convertir des signaux filtrés à la fréquence d'origine plus élevée; le filtre de fréquence étant fixe, et l'assignation de canal de l'unité pouvant être commandée en commandant la fréquence d'oscillateur local du modificateur de fréquence.

5. Un répéteur selon la revendication 4, dans lequel les fréquences intermédiaires des trajets direct et inverse (20-27, 20'-27') d'une unité amplificatrice (13) diffèrent d'une quantité correspondant à l'espacement entre les fréquences de transmission et de réception des canaux, grâce à quoi un oscillateur local unique (29) peut être utilisé pour l'unité.

6. Un répéteur selon l'une quelconque des revendications précédentes, dans lequel le moyen de surveillance et de commande (14, 16, 17) est commun à toutes les unité amplificatrices.

7. Un répéteur selon la revendication 6 lorsqu'elle dépend de la revendication 3, à utiliser dans un système de radio mobile, dans lequel un canal est désigné comme canal de signalisation, le moyen de surveillance et de commande (14, 16, 17; 16') est agencé pour réassigner, dans le cas où un canal porteur de trafic est identifié lorsque l'unité amplificatrice (13, 13') est assignée au canal de signalisation et que les unités restantes sont en utilisation, ladite unité amplificatrice au canal identifié.

8. Un répéteur selon l'une quelconque des revendications 1 à 5, dans lequel le moyen de commande (16') est commun à toutes les unités amplificatrices (13') et dans lequel chaque unité amplificatrice incorpore son propre moyen de surveillance.

9. Un répéteur selon la revendication 8, dans lequel le moyen de surveillance de chaque unité amplificatrice (13') inclut un synthétiseur et des circuits de décodage d'adresses et de multiplexage de données.

10. Un répéteur selon la revendication 9 dans lequel le moyen de commande (16') est constitué par une unité de commande pourvue d'un processeur central, d'une mémoire de programme et d'une mémoire de données non volatile, l'unité de commande étant interfacée avec l'unité amplificatrice (13').

11. Un répéteur selon la revendication 10, dans lequel l'unité de commande (16') agit pour choisir comme canal de signalisation d'une fréquence prédéterminée une première des unités amplificatrices (13'), et pour ordonner au synthétiseur de ladite première unité amplificatrice de s'accorder à ladite fréquence prédéterminée.

12. Un répéteur selon la revendication 11, dans lequel l'unité de commande (16') agit pour choisir comme dispositif de balayage de canal vocal une deuxième des unités amplificatrices (13'), et pour ordonner au synthétiseur de la deuxième unité amplificatrice de s'accorder à la fréquence du dispositif de balayage de canal vocal.

13. Un répéteur selon la revendication 12, dans lequel l'unité de commande (16') agit de manière à interroger ladite deuxième unité amplificatrice (16') afin de déterminer si cette unité est en train de recevoir un signal dont l'amplitude est supérieure à un seuil prédéterminé et pour valider cette unité amplificatrice (13') si ledit seuil prédéterminé est dépassé par le signal reçu.

14. Un répéteur selon la revendication 12, dans lequel l'unité de commande (16') peut agir, lorsque le signal de commande est inférieur audit seuil prédéterminé, pour ordonner au synthétiseur de ladite deuxième unité amplificatrice (13') de s'accorder successivement aux fréquences des autres canaux vocaux, afin d'interroger les autres unités amplificatrices (13') de manière à déterminer si une unité quelconque est en train de recevoir un signal dont l'amplitude est supérieure audit seuil prédéterminé et pour valider cette unité amplificatrice si ledit seuil prédéterminé est dépassé.

15. Un répéteur selon la revendication 13 ou la revendication 14, dans lequel l'unité de commande (16') agit pour allouer une troisième des unités amplificatrices (13') comme dispositif de canal vocal lorsqu'une unité amplificatrice est validée.

16. Un répéteur selon l'une quelconque des revendications 10 à 15, dans lequel l'unité de commande (16') agit pour balayer les unités amplificatrices (13') et pour libérer toute unité validée dans laquelle l'amplitude de signal reçu ne dépasse pas ledit seuil prédétermine.

17. Un système de radio mobile incluant au moins une station de base (1) couvrant une zone, et un répéteur (5) selon l'une quelconque des revendications précédentes servant à améliorer la communication entre la station de base (1) et les stations mobiles (3) à l'intérieur d'une sous-zone de la zone couverte.
